# EUROPÄISCHE PATENTSCHRIFT

(11) **EP 1 262 693 B1**
(45) Veröffentlichungstag und Bekanntmachung des Hinweises auf die Patenterteilung: **20.07.2005**
(21) Anmeldenummer: 02010002.0
(22) Anmeldetag: 04.05.2002
(51) Int. Cl.: F16H 63/32, F16D 1/072

(54) **Schaltschiene mit einer Schaltgabel**
Shift rail with a shift fork
Tige de commande de fourchettes avec fourchette de commande de changement de vitesses

(30) Priorität: 31.05.2001 DE 10126438
(43) Veröffentlichungstag der Anmeldung: 04.12.2002
(73) Patentinhaber: INA-Schaeffler KG, 91074 Herzogenaurach (DE)
(72) Erfinder: Maier, Waldemar, 91074 Herzogenaurach (DE); Werner, Stefan, 91413 Neustadt (DE); Kuhm, Didier, 67170 Brumath (FR); Schübel, Rainer, 91589 Aurach (DE); Döppling, Horst, 91074 Herzogenaurach (DE)

(56) Entgegenhaltungen:
- DE-A- 1 625 794
- DE-C- 19 940 628

## Beschreibung

### Gebiet der Erfindung

Die Erfindung betrifft eine Schaltschiene mit einer an der Schaltschiene mittels eines Schwenkzapfens in Längsrichtung der Schaltschiene festgehaltenen Schaltgabel, wobei die Schaltgabel einen Abschnitt der Schaltschiene mit zwei sich gegenüberliegenden sowie parallel zueinander ausgerichteten Führungsflächen wenigstens teilweise umgreift und dabei um die Schwenkachse eines Schwenkzapfens zumindest um einen geringen Winkelbetrag schwenkbar durch die Führungsflächen geführt ist und wobei der maximal schwenkbare Winkelbetrag durch ein in einer Querebene der Schaltschiene betrachtetes zumindest seitlich zu dem Abschnitt vorgesehenes Spiel zwischen dem Abschnitt und der Schaltgabel festgelegt ist.

### Hintergrund der Erfindung

Unter Schaltschienen sind alle die Elemente zu verstehen, die eine oder mehrere mit dem Element in Längsrichtung des Elementes verschiebbare und/oder schwenkbare Schaltgabeln aufnehmen. Unter dem Begriff Schaltschiene sind also auch die weitläufig bekannten Schaltstangen oder ähnliches zu verstehen.

Eine gattungsgemäße Schaltschiene ist in DE 199 40 628 C1 beschrieben. Auf der Schaltschiene ist mittels eines Schwenkzapfens eine Schaltgabel in Längsrichtung der Schaltschiene nicht verschiebbar festgehalten. Ein Abschnitt der Schaltschiene ist mit zwei aneinander gegenüberliegenden sowie zueinander planparallelen Führungsflächen versehen. Die Schaltgabel umgreift den Abschnitt mit den Führungsflächen mit einem gabelartig ausgebildeten Vorsprung. Der Abschnitt mit den Führungsflächen weist ein von der einen Führungsfläche zu der anderen Führungsfläche durchgehendes Loch auf, in dem der Schwenkbolzen aufgenommen ist. Der Schwenkbolzen erstreckt sich oberhalb der einen Führungsfläche und unterhalb der anderen Führungsfläche über den Abschnitt hinaus in die Schaltgabel. In einer Querebene der Schaltschiene von vorne oder hinten betrachtet, ist seitlich des Abschnittes zwischen dem Abschnitt und der Schaltschiene ein Spiel vorgesehen. Die Schaltgabel kann somit um eine die Rotationsachse des Schwenkbolzens bildende Schwenkachse um einen geringen Betrag geschwenkt werden. Der Schwenkwinkel ist durch die Größe des Spieles festgelegt. Die Herstellung einer derartigen Anordnung ist relativ aufwendig und die Kosten für die Herstellung sind deshalb relativ hoch, da zum Beispiel die Bohrung für die Aufnahme des Schwenkbolzens passgenau ausgeführt sein muß. Ebenso ist der Aufwand zur Montage der Schaltschiene mit der Schaltgabel relativ hoch, da vor Einführen des Schwenkbolzens die Bohrungen in der Schaltgabel und in dem Abschnitt der Schaltschiene zueinander ausgerichtet werden müssen.

### Zusammenfassung der Erfindung

Die Aufgabe der Erfindung ist es daher, eine Schaltschiene, Schaltstange oder ein ähnliches Element mit mindestens einer Schaltgabel der gattungsbildenden Art zu schaffen, die sich einfach und kostengünstig herstellen lässt.

Diese Aufgabe ist durch den Gegenstand des kennzeichnenden Teiles des Anspruchs 1 dadurch gelöst, dass der Schwenkzapfen durch eine in das Loch greifende Verformung aus dem Material der Schaltgabel gebildet ist. Ein gabelförmiger Vorsprung an der Schaltgabel oder auch ein nabenförmiger, die Schaltgabel vollständig umgreifender, Vorsprung werden bei ihrer Montage von außen partiell derartig verformt, daß plastisch Material aus der Wandung des Vorsprunges in das Loch verdrängt ist. Das Material ist mittels einer Prägung oder einer Durchstellung in das Loch aus dem Abschnitt der Schaltschiene verdrängt. Dabei kann das Loch ein Sackloch oder ein Durchgangsloch an dem Abschnitt in der Schaltschiene sein. Das Loch ist als Bohrung oder gestanzt kreisrund ausgeführt. Beim Verformen des Materiales passt sich das in das Loch eindringende Material der kreisrunden Form des Loches an. Seitlich zwischen dem Vorsprung der Schaltgabel und dem Abschnitt an der Schaltschiene ist wie vorher schon beschrieben, Spiel vorgesehen. Die einteilig mit der Schaltgabel verbundene Prägung bzw. Durchstellung schwenkt mit der Schaltgabel um eine sich durch die Rotationsachse der Prägung bzw. Durchstellung erstreckenden Schwenkachse, soweit es das seitliche Spiel zulässt. Die erfindungsgemäße Ausführung einer Schaltschiene hat folgende Vorteile:
- Es entfällt die passgenaue Herstellung der Löcher in der Schaltgabel.
- Für die Montage der Schaltgabel auf der Schaltschiene ist kein gesonderter Schwenkbolzen erforderlich. Das Loch in der Schaltschiene muss nicht mehr passgenau ausgeführt sein und kann deshalb kostengünstiger hergestellt werden.
- Die Schaltgabel kann sehr genau in ihrer geforderten Position zur Umgebungskonstruktion, beispielsweise zu einer Schaltgabelnut einer Schaltmuffe, ausgerichtet werden. Lageabweichungen der Schaltgabel von dieser Position, die bisher durch die Lage- und Formabweichungen der Bohrungen in der Schaltgabel und in dem Abschnitt entstanden, entfallen.
- Bevorzugt ist die Anwendung der Erfindung bei Schaltschienen mit aus Stahlblech hergestellten Schaltgabeln vorgesehen.
- Die Nabe kann umfangsseitig geschlossen, d. h. die Schaltwelle vollständig umgreifend ausgebildet werden. Es sind auf diese Weise große Steifigkeiten des Systems Schaltgabel-Schaltschiene erzielbar.

Eine Ausgestaltung der Erfindung sieht vor, dass die Schaltgabel zwei der Verformungen, Durchstellungen oder Prägungen als Schwenkzapfen aufweist. Die Verformungen liegen sich dabei auf der Schwenkachse einander gegenüber. Jeder der Schwenkzapfen greift in die Öffnung eines sich von der einen Führungsfläche zu der anderen Führungsfläche erstreckenden Durchgangsloches. Derartige Prägungen sind z. B. mit einem zangenartig ausgebildeten Formwerkzeug eingebracht, nachdem die Schaltgabel in ihrer Position zur Schaltschiene ausgerichtet ist. Mit einer derartigen Lösung sitzt die Schaltgabel sicher und positionsgenau schwenkbar auf dem Abschnitt der Schaltschiene.

Eine weitere Ausgestaltung der Erfindung sieht eine Schaltschiene vor, auf der eine Schaltgabel mit einer umfangsseitig geschlossen die Schaltschiene umgreifenden Nabe sitzt. Die Nabe weist vor ihrer Montage einen hohlzylindrischen Querschnitt auf. Der freie innere Durchmesser des Hohlzylinders der Nabe ist vor ihrer Montage auf den Abschnitt größer als der größtmögliche Abstand zwischen den zwei am weitesten voneinander entfernten sowie den Umriss eines Längsabschnittes der Schaltschiene in einer Querprojektion beschreibenden Punkten. Der Längsabschnitt begrenzt die Schaltschiene in eine Richtung, aus der die Nabe bei der Montage der Schaltgabel über diesen Längsabschnitt, die Schaltschiene dabei umfangsseitig umgreifend, auf den Abschnitt geschoben ist. Der Abschnitt, auf dem die Schaltgabel befestigt ist, sitzt also nicht einfach zugänglich an einem Ende der Schaltschiene, sondern ist in Längsrichtung von Längsabschnitten mit anderem Querschnitt zu der Schaltschiene begrenzt.

Die Längsabschnitte der Schaltschiene weisen einen oder mehrere von dem Querschnitt des Abschnittes abweichende Querschnitte auf. Wenn die Nabe auf den Abschnitt geführt werden soll, muss diese über einen der Längsabschnitte problemlos zumindest geschoben werden können. Der Längsabschnitt kann dabei einen größeren oder gleich großen Querschnitt zu dem Abschnitt aufweisen. Die Querschnitte können beliebige geometrische Formen aufweisen, vorzugsweise ist jedoch ein kreisrunder Querschnitt zumindest an dem Längsabschnitt und dem Abschnitt vorgesehen, wobei der kreisrunde Querschnitt an dem Abschnitt mit Abflachungen versehen ist. Diese Abflachungen bilden die Führungsflächen. Der kleinste freie innere Durchmesser der Nabe ist für diese Ausgestaltung größer als der größtmögliche Außendurchmesser des kreisrunden Querschnittes an dem Längsabschnitt, über den die Nabe bei der Montage der Schaltgabel auf den Abschnitt geschoben wird.

Ein Verfahren zur Befestigung einer Schaltgabel mit einer in ihrer Querschnittsform der Querschnittsform des Abschnittes weitestgehend angepaßten Nabe, Gabel oder ähnlichem, sieht folgende Schritte vor:
- Positionieren der Schaltgabel auf den Führungsflächen des Abschnittes
- Einbringen mindestens eines Vorsprunges in die Schaltgabel, so dass der Vorsprung in die Bohrung eindringt.

Es ist ein weiteres Verfahren zur Befestigung einer Schaltgabel mit einer flach an den Führungsflächen anliegenden Nabe vorgesehen, wobei die Nabe vor ihrer Montage auf den Abschnitt hohlzylindrisch ausgebildet ist. Dieses Verfahren sieht folgende Verfahrensschritte vor:
- Positionieren der Schaltgabel zu den Führungsflächen auf dem Abschnitt
- Verformen der Nabe der Schaltgabel mit einem Formwerkzeug, bis die Nabe flach an den Führungsflächen anliegt
- Einbringen mindestens eines Vorsprunges in die Nabe, so dass der Vorsprung in die Bohrung eindringt.

Beim Verformen der Nabe weicht die Wand der anfangs kreisrunden Nabe zur Seite aus und entfernt sich von dem Abschnitt. Zwischen dem Abschnitt und der Nabe bildet sich damit seitlich ein Spalt, der den Winkelbetrag der schwenkbaren Schaltgabel festlegt. Anschließend sind wieder ein oder mehrere Vorsprünge in die Nabe eingebracht, so daß die Vorsprünge in die Öffnung des Loches eindringen und die Nabe in Längsrichtung auf der Schaltwelle fixiert aber um einen geringen Winkelbetrag schwenkbar angeordnet ist.

### Kurze Beschreibung der Zeichnungen

Die Erfindung wird nachfolgend anhand von Ausführungsbeispielen näher erläutert. Es zeigen:
- Figur 1: Ein Ausführungsbeispiel einer erfindungsgemäßen Schaltschiene, teilweise geschnitten,
- Figur 2: ein Detail der Schaltschiene aus Figur 1 im Schnitt entlang der Linie II - II ohne Schaltgabel,
- Figur 3: den ersten Verfahrensschritt eines Verfahrens zur Montage der Schaltgabel auf der Schaltschiene,
- Figur 4: die Anordnung der Nabe auf der Schaltschiene aus Figur 3 in einem Querschnitt,
- Figur 5: die Anordnung der Nabe auf der Schaltschiene aus Figur 3 längs dargestellt, teilweise geschnitten,
- Figur 6: Sitz der Nabe aus Figur 5 auf der Schaltschiene nach dem Einbringen erfindungsgemäßer Vorsprünge in einem Querschnitt,
- Figur 7: der Sitz der Nabe nach Figur 5 auf der Schaltschiene längs dargestellt, in einem Teilschnitt.

### Detaillierte Beschreibung der Zeichnungen

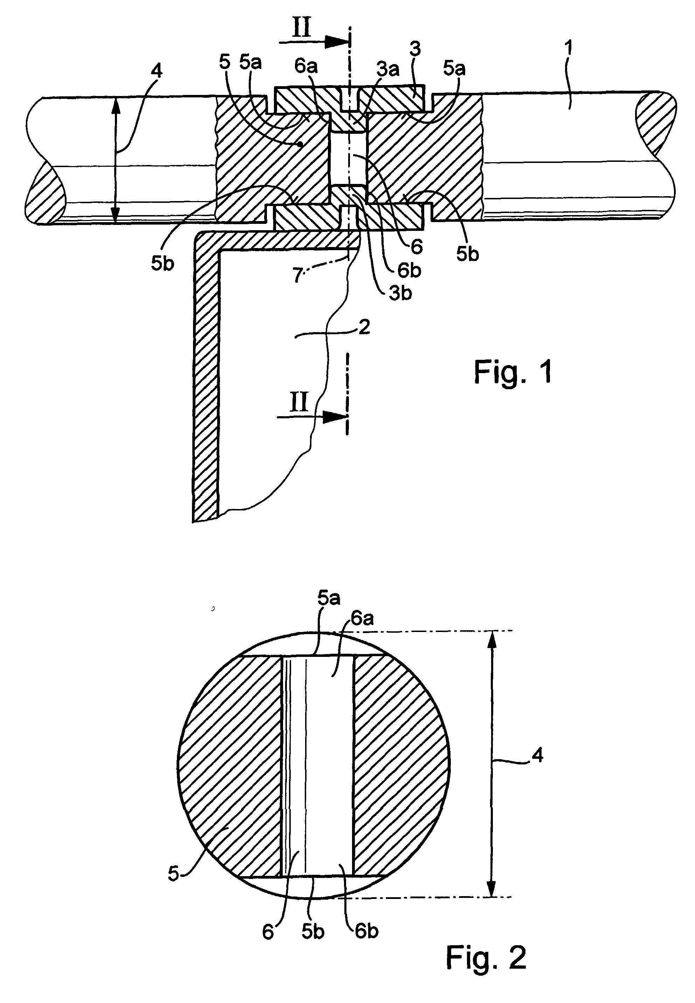

In Figur 1 ist ein Ausführungsbeispiel der Erfindung dargestellt. Auf einer Schaltschiene 1 sitzt eine Schaltgabel 2. Die Schaltgabel 2 weist eine Nabe 3 auf. In die Nabe 3 sind mittels eines Umformvorganges zwei sich gegenüberliegende Schwenkzapfen 3a und 3b eingebracht. Wie in Figur 1 und Figur 2 dargestellt ist, weist die Schaltschiene 1 weitestgehend einen kreisrunden Querschnitt vom Durchmesser 4 auf. Der kreisrunde Querschnitt ist an einem Abschnitt 5 beidseitig abgeflacht. Die Abflachungen bilden Führungsflächen 5a und 5b. Die Nabe 3 ist der Kontur des Abschnittes 5 angepaßt und auf den Führungsflächen 5a und 5b geführt. Von der einen Führungsfläche 5a zu der anderen Führungsfläche 5b erstreckt sich ein durchgehendes Loch 6. Der Schwenkzapfen 3a greift in die Öffnung 6a und der Schwenkzapfen 3b in die Öffnung 6b des Loches 6. Die Mittenachse der Schwenkzapfen 3a und 3b bildet die Schwenkachse 7, um die die Schaltgabel 2 mit einem geringen Winkelbetrag geschwenkt werden kann.

Die Schaltschiene 1 ist an dem Abschnitt 5 umfangsseitig von der flach an den Führungsflächen 5a und 5b anliegenden Nabe 3 vollständig umgriffen.

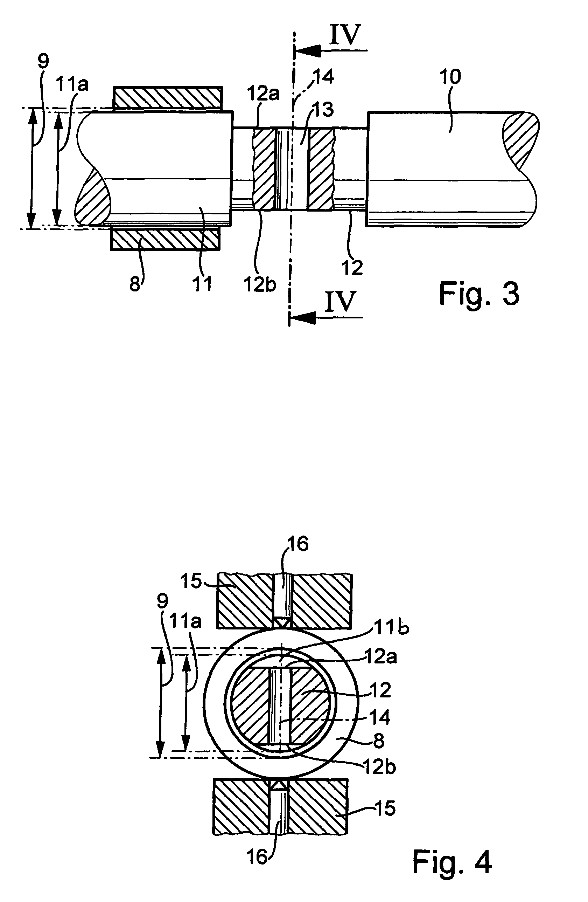

Die Figuren 3 bis 7 zeigen Details aus einem Verfahren zur Montage einer Schaltgabel auf einer erfindungsgemäßen Schaltschiene. Figur 3 zeigt eine Schaltschiene 10, die an einem Längsabschnitt 11 von einer kreisrund ausgebildeten sowie aus Blech gezogenen Nabe 8 einer nicht weiter dargestellten Schaltgabel vollständig umgriffen ist. Der Längsabschnitt 11 weist einen kreisrunden Querschnitt 11b vom Durchmesser 11a auf. Der kleinste freie innere Durchmesser 9 der Nabe 8 muß größer sein als der größte äußere Durchmesser 11a an dem Längsabschnitt 11, um die Nabe 8 über den Längsabschnitt 11 zu einem Abschnitt 12 führen zu können. An dem Abschnitt 12 ist die Schaltschiene 10 abgeflacht. Die Abflachungen sind als Führungsflächen 12a und 12b ausgebildet. Demzufolge ist der Querschnitt des Längsabschnittes 11 größer als der Querschnitt des Abschnittes 12 (Figur 4).

In Figur 4 ist die Position der Nabe 8 einer nicht dargestellten Schaltgabel zu den Führungsflächen 12a und 12b dargestellt. Sie ist an dem Abschnitt 12 ausgerichtet und steht in der Ausgangsstellung zur Befestigung der Nabe 8 an dem Abschnitt 12. Dazu werden beidseitig in Richtung entlang der Schwenkachse 14 Klemmbacken 15 eines nicht weiter dargestellten Formwerkzeuges an die Nabe 8 geführt. In den Klemmbacken 15 sitzt ein Formstempel 16.

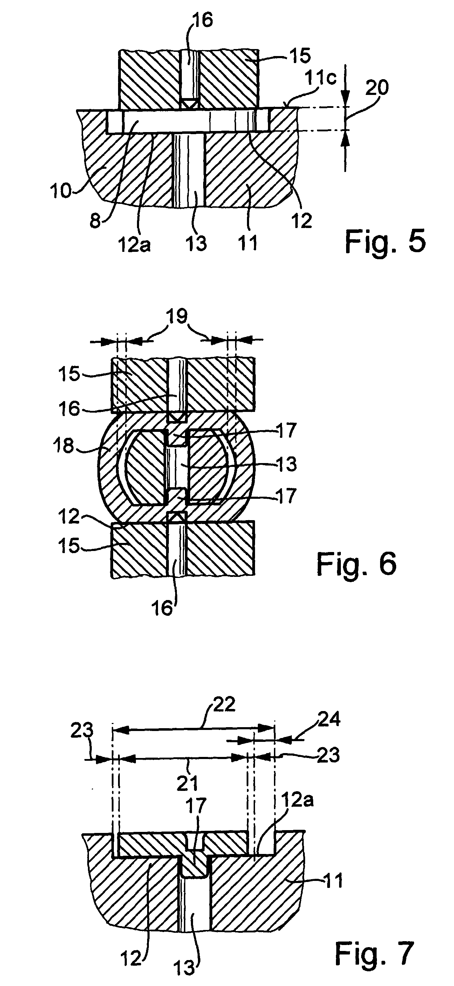

Die Nabe 8 wird mittels der Klemmbacken 15 soweit in Pfeilrichtung verformt, bis die Wand der Nabe 8 flach an den Führungsflächen 12a bzw. 12b anliegt (Figur 5). In einem weiteren Verfahrensschritt ist mittels der Formstempel 16 in Längsrichtung der Schwenkachse 14 in Richtung der Führungsfläche 12a, 12b jeweils ein Schwenkzapfen 17 ausgeformt. Dabei dringt das verdrängte Material der Nabe 8 zur Bildung des Schwenkzapfens 17 in Richtung der Schwenkachse 14 in das Loch 13 ein.

Wie aus Figur 6 ersichtlich ist, wölbt sich die Nabe 8 seitlich von den Seitenflächen 18 des Abschnittes 12 aufgrund ihrer Verformung ab. Es entsteht seitlich an beiden Seiten der Schwenkachse 14 ein Spiel 19 zwischen der Nabe 8 und dem Abschnitt 12. Mittels des Spieles 19 ist der Winkelbetrag für das Schwenken der Schaltgabel um die Schwenkachse 14 zur Schaltschiene 10 festgelegt. Demnach ist mit der Größe des inneren Durchmessers 9 der Nabe 8 und der Tiefe 20 (Figur 5), mit der jede der Führungsflächen 12a, 12b von der Mantellinie 11c des Längsabschnittes 11 entfernt ist, die Größe des Spieles 19 zwischen den Flanken 18 des Abschnittes 12 und der Nabe 8 beeinflussbar (Figur 4 und Figur 6). Figur 7 zeigt wie die Nabe 8 und damit die nicht weiter dargestellte Schaltgabel in Längsrichtung der Schaltschiene 10 zu der Schaltschiene 10 positioniert ist.

Wie anfangs schon erwähnt, ist es möglich mittels einer Schaltschiene gemäß Erfindung eine Schaltgabel auf der Schaltschiene exakt zu der Umgebungskonstruktion zu positionieren. Lageabweichungen, die z. B. durch das Zuordnen einer gebohrten Nabe zu dem Loch in dem Abschnitt für das Einbringen eines Schwenkzapfens nach dem Stand der Technik aufgrund der Lagetoleranzen der Bohrungen in der Nabe und der Schaltschiene üblicherweise entstehen, sind mit der Erfindung ausgeschlossen. Die Schwenkzapfen 17 werden erst in die Nabe 8 eingebracht, wenn die Schaltgabel genau in ihrer vorbestimmten Position steht. Die Länge 21 der Nabe 8 und die Breite 22 des Abschnittes 12 sind der theoretisch maximal möglichen Summentoleranz 24 angepasst (Figur 7), mit der fertigungsbedingt die Position der Nabe 8 in Längsrichtung auf der Schaltschiene 10 variieren kann. Außerdem ist in der Breite 22 mit einem Längsspiel 23 auch das Spiel 19 soweit zu berücksichtigen, daß für die Nabe 8 längsseitig genug Bewegungsfreiheit bleibt, wenn die Schaltgabel schwenkt.

### Bezugszeichenliste

- 1: Schaltschiene
- 2: Schaltgabel
- 3: Nabe
- 3a: Schwenkzapfen
- 3b: Schwenkzapfen
- 4: Durchmesser
- 5: Abschnitt
- 5a: Führungsfläche
- 5b: Führungsfläche
- 6: Loch
- 6a: Öffnung
- 6b: Öffnung
- 7: Schwenkachse
- 8: Nabe
- 9: Durchmesser
- 10: Schaltschiene
- 11: Längsabschnitt
- 11a: Durchmesser
- 11b: Querschnitt
- 11c: Mantellinie
- 12: Abschnitt
- 12a: Führungsfläche
- 12b: Führungsfläche
- 13: Loch
- 14: Schwenkachse
- 15: Klemmbacken
- 16: Formstempel
- 17: Schwenkzapfen
- 18: Flanke
- 19: Spiel
- 20: Tiefe
- 21: Länge
- 22: Breite
- 23: Längsspiel
- 24: Summentoleranz

## Patentansprüche

1. Schaltschiene (1, 10) mit einer an der Schaltschiene (1, 10) mittels eines Schwenkzapfens (3a, 3b, 17) in Längsrichtung der Schaltschiene (1, 10) festgehaltenen Schaltgabel (2), wobei die Schaltgabel (2) einen Abschnitt (5, 12) der Schaltschiene (1, 10) mit zwei sich gegenüberliegenden sowie parallel zueinander ausgerichteten Führungsflächen (5a, 5b, 12a, 12b) wenigstens teilweise umgreift und dabei um die Schwenkachse (7, 14) eines in einem Loch (6, 13) des Abschnitts (5, 12) angebrachten Schwenkzapfens (3a, 3b, 17) zumindest um einen geringen Winkelbetrag schwenkbar durch die Führungsflächen (5a, 5b, 12a, 12b) geführt ist und wobei der maximal schwenkbare Winkelbetrag durch ein in einer Querprojektion der Schaltschiene (1, 10) betrachtetes zumindest seitlich zu dem Abschnitt (5, 12) vorgesehenes Spiel (19) zwischen dem Abschnitt (5, 12) und der Schaltgabel (2) festgelegt ist, **dadurch gekennzeichnet, dass** der Schwenkzapfen (3a, 3b, 17) durch eine in das Loch (6, 13) greifende Verformung aus dem Material der Schaltgabel (2) gebildet ist.

2. Schaltschiene nach Anspruch 1, **dadurch gekennzeichnet, dass** die Schaltgabel (2) zwei Schwenkzapfen (3a, 3b, 17) aufweist, wobei die Schwenkzapfen (3a, 3b, 17) sich auf der Schwenkachse (7, 14) einander gegenüberliegen und dabei jeweils in eine Öffnung (6a, 6b) eines von einer der Führungsflächen (5a, 5b, 12a, 12b) durch die Schaltschiene (1, 10) hindurchgehenden Loches (6, 13) eingreifen.

3. Schaltschiene nach Anspruch 1, **dadurch gekennzeichnet, dass** die Schaltschiene (1, 10) an dem Abschnitt (5, 12) umfangsseitig durch eine flach an den Führungsflächen (5a, 5b, 12a, 12b) anliegenden Nabe (3, 8) der Schaltgabel (2) vollständig umgriffen ist und dass die Nabe (3, 8) vor ihrer Befestigung auf den Abschnitt (5, 12) hohlzylindrisch ausgebildet ist, wobei der freie innere Durchmesser (4, 9) der Nabe (3, 8) vor ihrer Befestigung auf den Abschnitt (5, 12) größer ist als der größtmögliche Abstand zwischen den zwei am weitesten voneinander entfernten sowie den Umriss eines Längsabschnittes (11) der Schaltschiene (1, 10) in einer Querprojektion beschreibenden Punkten und wobei der Längsabschnitt (11) die Schaltschiene (1, 10) in eine Längsrichtung begrenzt, aus der die Nabe (3, 8) bei einer Montage der Schaltgabel (2) auf der Schaltschiene (1, 10) längs über den Längsabschnitt (11) auf den Abschnitt (5, 12) geschoben ist.

4. Schaltschiene nach Anspruch 3, **dadurch gekennzeichnet, dass** der Längsabschnitt (11) einen größeren Querabschnitt (11b) als der Abschnitt (12) aufweist.

5. Schaltschiene nach Anspruch 4, **dadurch gekennzeichnet, dass** die Schaltschiene (1, 10) zumindest an dem Längsabschnitt (11) und dem Abschnitt (5, 12) einen kreisrunden Querschnitt (11b) aufweist, wobei der Querschnitt an dem Abschnitt (12) für die Führungsflächen (12a, 12b) abgeflacht ist und dass der kleinste freie innere Durchmesser (9) der Nabe (8) vor ihrer Befestigung auf dem Abschnitt (12) größer ist als der größtmögliche Außendurchmesser (11a) des Querschnitts (11b) des Längsabschnitts (11).

6. Verfahren zur Herstellung einer Schaltschiene (1, 10) nach Anspruch 1, **gekennzeichnet durch** folgende Schritte:
- Positionieren der Schaltgabel auf den Führungsflächen (5a, 5b, 12a, 12b) des Abschnittes (5, 12)
- Ausformen mindestens einer Verformung aus dem Material der Schaltgabel zum Bilden wenigstens eines Schwenkzapfens (3a, 3b, 17) an der Schaltgabel (2).

7. Verfahren zur Herstellung einer Schaltschiene nach Anspruch 3, 4 und 5 **gekennzeichnet durch** folgende Schritte:
- Positionieren der Schaltgabel (2) zu den Führungsflächen (5a, 5b, 12a, 12b) auf dem Abschnitt (5, 12)
- Verformen der Nabe (3, 8) der Schaltgabel bis die Nabe (3, 8) flach an den Führungsflächen (5a, 5b, 12a, 12b) anliegt
- Ausformen mindestens einer Verformung aus dem Material der Nabe (3, 8) zum Bilden wenigstens eines Schwenkzapfens (3a, 3b, 17) an der Nabe (3, 8).

## Claims

1. Gearshift rail (1, 10) with a gearshift fork (2) that is secured on the gearshift rail (1, 10) in longitudinal direction of the gearshift rail (1, 10) by a pivot pin (3a, 3b, 17), the gearshift fork (2) at least partly surrounding a section (5, 12) of the gearshift rail (1, 10) comprising two opposite and parallel guide surfaces (5a, 5b, 12a, 12b), the gearshift fork (2) being guided by the guide surfaces (5a, 5b, 12a, 12b) for pivoting at least through a small angle about the axis of pivot (7, 14) of a pivot pin (3a, 3b, 17) arranged in a hole (6, 13) of the section (5, 12), and the maximum angle of pivot being defined by a clearance (19) provided between the section (5, 12) and the gearshift fork (2) at least laterally of the section (5, 12) as viewed in a cross projection of the gearshift rail (1, 10), **characterised in that** the pivot pin (3a, 3b, 17) is formed by a deformation out of the material of the gearshift fork (2), which deformation engages into the hole (6, 13).

2. Gearshift rail according to claim 1, **characterised in that** the gearshift fork (2) comprises two pivot pins (3a, 3b, 17) that are situated opposite each other on the axis of pivot (7, 14) and each of the pivot pins (3a, 3b, 17) engages into an opening (6a, 6b) of a hole (6, 13) that extends from one of guide surfaces (5a, 5b, 12a, 12b) through the gearshift rail (1, 10).

3. Gearshift rail according to claim 1, **characterised in that** the gearshift rail (1, 10) is fully surrounded peripherally on the section (5, 12) by a hub (3, 8) of the gearshift fork (2), said hub bearing flatly against the guide surfaces (5a, 5b, 12a, 12b), prior to fixing on the section (5,12), the hub (3, 8) has a hollow cylindrical configuration, the clear inner diameter (4, 9) of the hub (3, 8) prior to fixing on the section (5, 12) is larger than the largest possible distance between the two points that are most vastly spaced from each other and describe the outline of a longitudinal portion (11) of the gearshift rail (1, 10) in a cross projection, and the longitudinal portion (11) delimits the gearshift rail (1, 10) in a longitudinal direction out of which the hub (3, 8), during a mounting of the gearshift fork (2) on the gearshift rail (1, 10), is pushed in longitudinal direction over the longitudinal portion (11) onto the section (5, 12).

4. Gearshift rail according to claim 3, **characterised in that** the longitudinal portion (11) has a larger cross-section (11b) than the section (12).

5. Gearshift rail according to claim 4, **characterised in that** the gearshift rail (1, 10) has a circular cross-section (11b) at least on the longitudinal portion (11) and on the section (5, 12), the cross-section on the section (12) for the guide surfaces (12a, 12b) is flattened, and the smallest clear inner diameter (9) of the hub (8) prior to its fixing on the section (12) is larger than the largest possible outer diameter (11a) of the cross-section (11b) of the longitudinal portion (11).

6. Procedure for manufacturing a gearshift rail (1, 10) according to claim 1, **characterised by** the following steps:
- positioning the gearshift fork on the guide surfaces (5a, 5b, 12a, 12b) of the section (5, 12)
- shaping at least one deformation out of the material of the gearshift fork for forming at least one pivot pin (3a, 3b, 17) on the gearshift fork (2).

7. Procedure for manufacturing a gearshift rail according to claims 3, 4 and 5, **characterised by** the following steps:
- positioning the gearshift fork (2) relative to the guide surfaces (5a, 5b, 12a, 12b) on the section (5, 12),
- deforming the hub (3, 8) of the gearshift fork till the hub (3, 8) comes to bear flatly against the guide surfaces (5a, 5b, 12a, 12b),
- shaping at least one deformation out of the material of the hub (3, 8) for forming at least one pivot pin (3a, 3b, 17) on the hub (3, 8).

## Revendications

1. Rail (1, 10) de changement de vitesse avec une fourchette (2) de changement de vitesse qui est fixée par un pivot (3a, 3b, 17) sur le rail (1, 10) de changement de vitesse en direction longitudinale du rail (1, 10) de changement de vitesse, ladite fourchette (2) de changement de vitesse entourant, au moins partiellement, une section (5, 12) du rail (1, 10) de changement de vitesse ayant deux surfaces de guidage (5a, 5b, 12a, 12b) opposées et parallèles, l'une à l'autre, ladite fourchette (2) de changement de vitesse étant guidée par les surfaces de guidage (5a, 5b, 12a, 12b) pour pivoter au moins d'un petit angle autour d'un axe de pivotement (7, 14) d'un pivot (3a, 3b, 17) qui est disposé dans un trou (6, 13) de la section (5, 12), et l'angle maximum de pivotement étant défini par un jeu (19) prévu, au moins latéralement de la section (5, 12) en regardant dans une projection transversale du rail (1, 10) de changement de vitesse, entre la section (5, 12) et la fourchette (2) de changement de vitesse, **caractérisé en ce que** le pivot (3a, 3b, 17) est formé par une déformation à partir du matériau de la fourchette (2) de changement de vitesse, laquelle déformation pénètre dans le trou (6, 13).

2. Rail de changement de vitesse selon la revendication 1, **caractérisé en ce que** la fourchette (2) de changement de vitesse comprend deux pivots (3a, 3b, 17), ces pivots (3a, 3b, 17) sont situés l'un à l'opposé de l'autre sur l'axe de pivotement (7, 14), et chaque pivot s'engage dans une ouverture (6a, 6b) d'un trou (6, 13) qui s'étend à partir de l'une des surfaces de guidage (5a, 5b, 12a, 12b) à travers le rail (1, 10) de changement de vitesse.

3. Rail de changement de vitesse selon la revendication 1, **caractérisé en ce que**, sur la section (5, 12), le rail (1, 10) de changement de vitesse est complètement entouré en direction périphérique par un moyeu (3, 8) de la fourchette (2) de changement de vitesse, ce moyeu (3, 8) s'appuie à plat contre les surfaces de guidage (5a, 5b, 12a, 12b), et, avant sa fixation sur la section (5, 12), ce moyeu (3, 8) a une configuration cylindrique creuse, le diamètre interne libre (4, 9) du moyeu (3, 8) avant sa fixation sur la section (5, 12) est supérieur à la plus grande distance possible entre les deux points les plus éloignés, l'un de l'autre, et qui décrivent le contour d'une portion longitudinale (11) du rail (1, 10) de changement de vitesse dans une projection transversale, et la portion longitudinale (11) délimite le rail (1, 10) de changement de vitesse dans une direction longitudinale à partir de laquelle, lors d'un montage de la fourchette (2) de changement de vitesse sur le rail (1, 10) de changement de vitesse, le moyeu (3, 8) est poussé en direction longitudinale sur la section (5, 12) en passant sur la portion longitudinale (11).

4. Rail de changement de vitesse selon la revendication 3, **caractérisé en ce que** la portion longitudinale (11) a une section droite (11b) qui est plus grande que celle de la section (12).

5. Rail de changement de vitesse selon la revendication 4, **caractérisé en ce que**, au moins sur la portion longitudinale (11) et sur la section (5, 12), le rail (1, 10) de changement de vitesse a une section droite circulaire (11b), la section droite de la section (12) pour les surfaces de guidage (12a, 12b) étant aplatie, et le plus petit diamètre (9) interne libre du moyeu (8) avant sa fixation sur la section (12) est supérieur au plus grand diamètre externe (11a) possible de la section droite (11b) de la portion longitudinale (11).

6. Procédé de fabrication d'un rail (1, 10) de changement de vitesse selon la revendication 1, **caractérisé par** les étapes suivantes :
- positionnement de la fourchette de changement de vitesse sur les surfaces de guidage (5a, 5b, 12a, 12b) de la section (5, 12),
- formage d'au moins une déformation à partir du matériau de la fourchette de changement de vitesse pour former au moins un pivot (3a, 3b, 17) sur la fourchette de changement de vitesse (2).

7. Procédé de fabrication d'un rail de changement de vitesse selon les revendications 3, 4 et 5, **caractérisé par** les étapes suivantes :
- positionnement de la fourchette (2) de changement de vitesse par rapport aux surfaces de guidage (5a, 5b, 12a, 12b) sur la section (5, 12),
- déformation du moyeu (3, 8) de la fourchette de changement de vitesse jusqu'au moment où le moyeu (3, 8) vient s'appuyer à plat contre les surfaces de guidage (5a, 5b, 12a, 12b),
- formage d'au moins une déformation à partir du matériau du moyeu (3, 8) pour former au moins un pivot (3a, 3b, 17) sur le moyeu (3, 8).
